Europäisches Patentamt

European Patent Office

Office européen des brevets

Numéro de publication: **0 274 955**
A1

## DEMANDE DE BREVET EUROPEEN

Numéro de dépôt: **87402907.7**

Date de dépôt: **18.12.87**

Int. Cl.⁴: **H01G 4/34** , H01G 13/00

Priorité: **19.12.86 FR 8617880**

Date de publication de la demande:
**20.07.88 Bulletin 88/29**

Etats contractants désignés:
**DE GB IT NL**

Demandeur: **COMPAGNIE EUROPEENNE DE COMPOSANTS ELECTRONIQUES LCC**
**50, rue Jean-Pierre Timbaud**
**F-92400 Courbevoie(FR)**

Inventeur: **Pageaud, Michel**
**THOMSON-CSF SCPI 19, avenue de Messine**
**F-75008 Paris(FR)**

Mandataire: **Guérin, Michel et al**
**THOMSON-CSF SCPI 19, avenue de Messine**
**F-75008 Paris(FR)**

**Procédé permettant l'ajustement de la capacité d'un condensateur au cours de sa fabrication.**

L'invention se rapport à un procédé permettant l'ajustement de la capacité d'un condensateur au cours de sa fabrication et par rapport à une capacité étalon. Le procédé comprend les étapes de :
- présentation de l'élément capacitif destiné à devenir le condensateur ajusté, cet élément ayant été conçu pour avoir une capacité légèrement supérieure à la capacité étalon,
- mesure de la capacité de cet élément capacitif,
- réalisation d'une entaille (6) dans le volume actif de l'élément capacitif, l'entaille correspondant à l'excès de capacité par rapport à la capacité étalon.

FIG_2

EP 0 274 955 A1

# PROCEDE PERMETTANT L'AJUSTEMENT DE LA CAPACITE D'UN CONDENSATEUR AU COURS DE SA FABRICATION

La présente invention concerne l'ajustement de la capacité d'un condensateur par rapport à un étalon capacitif. Elle se rapporte plus particulièrement aux condensateurs du type à empilage ou en couches.

Plusieurs procédés d'ajustage capacitif sont connu de l'homme de l'art.

Un premier procédé connu concerne l'ajustage capacitif par démétallisation électrique. Ce procédé, existant sur les machines à bobiner, permet d'ajuster l'élément capacitif par rapport à la mesure de l'étalon en fin de bobinage. Cependant, ce procédé n'empêche pas, par la suite, que les pièces réalisées subissent chacune une dispersion de leur capacité due au traitement thermique et électrique. De ce fait, il n'existe plus de moyen technique pour ajuster la valeur capacitive de la pièce.

Un second procédé connu concerne l'ajustage capacitif par un contrôle précis des tolérances de fabrication sur la matière utilisée. Ce procédé met en place un contrôle sévère pour les tolérances des films utilisés, contrôle sur la marge, la largeur du film, l'épaisseur du film, le débord des films, etc. Cette méthode nécessite donc de nombreuses opérations longues et coûteuses, un classement rigoureux et précis. Comme pour la méthode précédente, il n'existe pas, non plus, de moyen technique pour ajuster, par la suite, la capacité de la pièce après traitemement thermique et électrique.

Un troisième procédé connu concerne l'ajustage capacitif par un tri sélectif des tolérances de fabrication des pièces réalisées. Ce procédé met en place un système de tri basé sur des couloirs de tolérances après mesure de la pièce par rapport à un étalon. La valeur lue en % est classée par ordre de grandeur des tolérances d'ajustement en tenant compte du signe de celles-ci. Ce système engendre des déchets capacitifs pour l'obtention de tolérances serrées. Comme pour les autres méthodes, il n'existe pas de moyen technique pour ajuster par la suite la capacité de la pièce après traitements thermique et électrique.

Enfin, un quatrième procédé concerne l'ajustage capacitif par un asservissement de la longueur de coupe lié directement en proportion sur la capacité de la pièce. Ce procédé met en place un système d'asservissement de la longueur de coupe dans la même proportion que la valeur lue en % par rapport à l'étalon capacitif. Ce système permet de faire une approche autour de l'étalon capacitif et resserre au mieux la courbe gaussienne de la valeur des pièces. Mais ce procédé n'atteint pas autour de l'étalon des valeurs réellement centrées car la correction de la longueur de coupe se fait sur une pièce qui ne peut être encore mesurée puisqu'elle n'est pas encore séparée du condensateur mère. De ce fait, il n'y a pas de correction ou d'asservissement autour de l'étalon, sinon le mécanisme engendrerait des phénomènes de rebonds.

Afin de pallier ces inconvénients, l'invention propose d'enregistrer, en % par rapport à l'étalon, la valeur de la pièce coupée et de faire un entaille dans cette même pièce pour enlever en copeaux le même pourcentage de volume actif en grop afin d'ajuster cette capacité. Il faut pour cela que chaque condensateur possède un pourcentage positif de volume actif par rapport à l'étalon. Au cas où un condensateur aurait un pourcentage négatif, il peut cependant être récupéré pour entrer dans une série à valeur nominale inférieure.

L'invention a donc pour objet un procédé permettant l'ajustement de la capacité d'un condensateur au cours de sa fabrication et par rapport à une capacité étalon, caractérisé en ce que le procédé comprend les étapes de:

-présentation de l'élément capacitif destiné à devenir le condensateur ajusté, cet élément ayant été conçu pour avoir une capacité légèrement supérieure à la capacité étalon,

- mesure de la capacité de cet élément capacitif,

- réalisation d'une entaille dans le volume actif de l'élément capacitif, l'entaille correspondant à l'excès de capacité par rapport à la capacité étalon.

L'invention sera mieux comprise et d'autres avantages apparaîtront au moyen de la description qui va suivre et des figures annexées parmi lesquelles :

- la figure 1 représente un élément capacitif selon l'art connu ;

- la figure 2 représente un élément capacitif après ajustement de la capacité par le procédé selon l'invention ;

- la figure 3 est un schéma explicatif d'une commande automatique mettant en oeuvre le procédé selon l'invention.

On utilise actuellement largement la technique du bobinage sur une roue de grand diamètre pour réaliser des condensateurs du type à empilage ou en couches. C'est une technique bien connu qu'il est inutile de rappeler.

Dans un condensateur de ce type, la capacité est fonction de la largeur active, de la longueur coupée et de son épaisseur, donc de son volume actif.

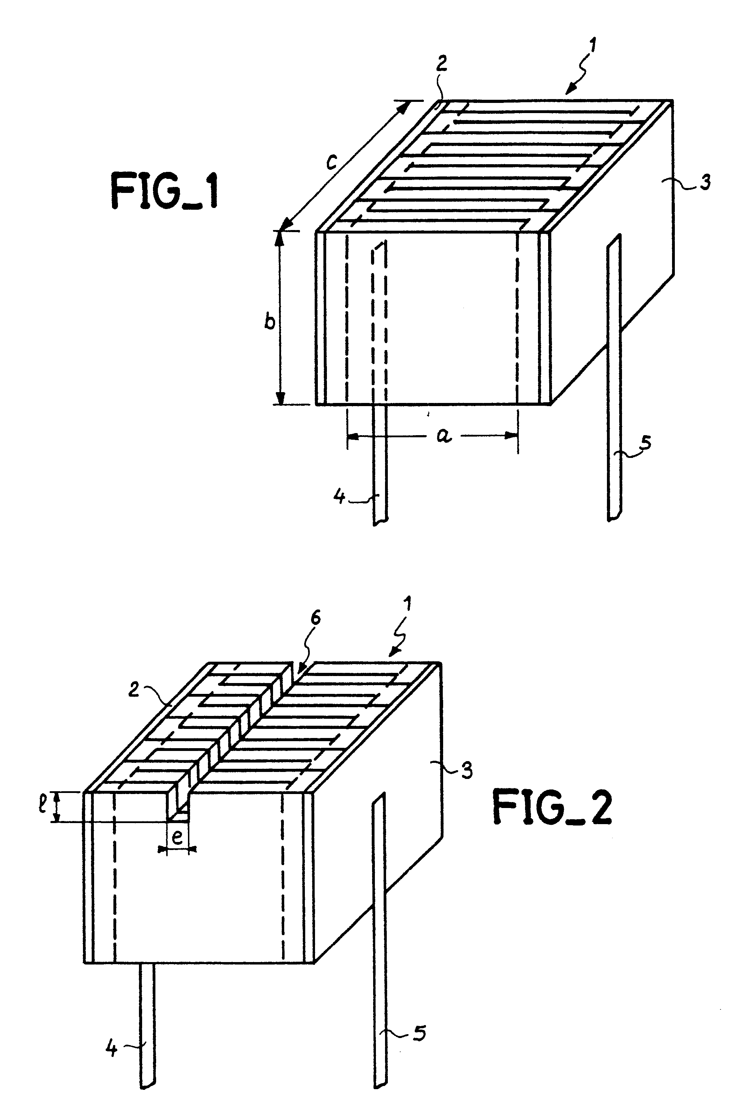

La figure 1 représente un élément capacitif tel qu'il est obtenu après découpe d'un ruban capacitif. La référence 1 désigne l'empilement constitué par la superposition de couches diélectriques alternant avec des couches conductrices ou armatures.

Selon l'art connu, les armatures de rang pair sont reliées entre elles par la métallisation 2 et les armatures de rang impair sont reliées entre elles par la métallisation 3. Les références 4 et 5 représentent des éléments de connexion soudés sur les armatures 2 et 3. La largeur $\underline{a}$ est la largeur active, la longueur $\underline{b}$ est la longueur de coupe et $\underline{c}$ désigne l'épaisseur. La largeur active $\underline{a}$ est la dimension correspondant aux parties des électrodes pairées et impaires en regard. Le volume actif d'un tel élément capacitif est donc

$V = a^x b^x c$.

La longueur de coupe $\underline{b}$ est intentionnellement choisie de façon que chaque élément capacitif ait une capacité de valeur légèrement supérieure à l'étalon. Si malgré tout la capacité est inférieure à la valeur étalon, l'élément capacitif peut être récupéré pour obtenir un condensateur à valeur nominale plus faible. En pratiquant une entaille dans le volume actif de l'élément capacitif, on réduira la valeur de la capacité. Dans la pratique, il convient que cette entaille permette une réduction continue, et non par bond, de la capacité afin de l'ajuster à la valeur désirée. Cette réduction continue de la capacité peut se faire selon l'épaisseur de l'élément capacitif.

La figure 2 représente, à titre non limitatif, un élément capacitif tel qu'il apparaît après avoir été entaillé selon le procédé de l'invention. L'entaille 6 est perpendiculaire à l'empilement 1 et parallèle aux métallisations 2 et 3. Dans cet exemple de réalisation, l'entaille a été réalisée sur toute l'épaisseur de l'élément capacitif. La largeur de l'entaille est $\underline{e}$ et sa profondeur $\underline{l}$. La valeur de la capacité étant proportionnelle à la surface des armatures en regard, on peut écrire :

$C = n \cdot \epsilon \frac{S}{d}$

étant la constante diélectrique du matériau placé entre les armatures, $S = a^x b$ étant la surface "active" d'une armature, d étant l'épaisseur du matériau diélectrique et n étant le nombre de condensateurs élémentaires dans l'élément capacitif 1.

On voit donc que pour diminuer une capacité de $\underline{x}$ pour cent, il suffit dans ce cas que la surface $s = l^x e$ représente $\underline{x}$ pour cent de la surface active S. Ceci représente une diminution du volume actif de $\underline{x}$ pour cent. L'épaisseur du condensateur étant déterminée, la largeur de l'outil servant à pratiquer l'entaille étant fixée pour toute une série d'opération (c'est-à-dire la largeur $\underline{e}$), l'ajustement de la capacité se fera grâce à la profondeur de l'entaille $\underline{l}$.

On a rassemblé dans le tableau ci-dessous, quelques exemples numériques qui permettent d'apprécier la qualité d'ajustement introduite par l'invention. Le tableau donne le pourcentage de surface active enlevé par une entaille d'une profondeur de 0,1mm, en fonction de la longueur $\underline{b}$ du condensateur à ajuster et de l'épaisseur $\underline{e}$ de l'outil servant à pratiquer l'entaille. Le tableau regroupe plusieurs valeurs pour la longueur b: la valeur minimale 3mm, la valeur moyenne 4mm et la valeur maximale 5mm. Le tableau donne également plusieurs valeurs pour l'épaisseur $\underline{e}$ de l'outil servant à pratiquer l'entaille et qui peut être une scie.

|  | b = 3mm | b = 4mm | b = 5mm |
|---|---|---|---|
| e = 0,5mm | 0,46 % | 0,35 % | 0,28 % |
| e = 0,3mm | 0,28 % | 0,21 % | 0,17 % |
| e = 0,2mm | 0,185 % | 0,14 % | 0,11 % |

La meilleure précision dans la réalisation de l'entaille est bien sûr obtenue avec une scie de 0.2mm d'épaisseur. D'après le tableau on voit qu'avec une scie de 0.2mm il y a une différence de 0,075 % de surface active enlevée par 0,1mm de profondeur d'entaille, entre les longueurs maximale et minimale de condensateur. Grâce à cette excellente précision, la variation du pourcentage par rapport à la longueur de coupe est à négliger puisque les tolérances exigées sont nettement supérieures à la précision obtenue.

L'ajustement de la capacité d'un condensateur par rapport à un condensateur étalon peut, grâce à l'invention, se faire avantageusement pendant le cycle de fabrication du condensateur. L'étape consistant à pratiquer l'entaille se fait alors après la lecture capacitive réalisée classiquement sur les machines de fabrication. On rappellera que sur ce type de machines, les éléments capacitifs obtenus par découpe d'un

3

ruban capacitif sont soudés à des éléments de connexion tels que ceux représenté sur les figures 1 et 2. Ces éléments capacitifs sont aussitôt testés électriquement et à partir de la lecture capacitive, on peut commander une scie qui effectuera l'entaille appropriée.

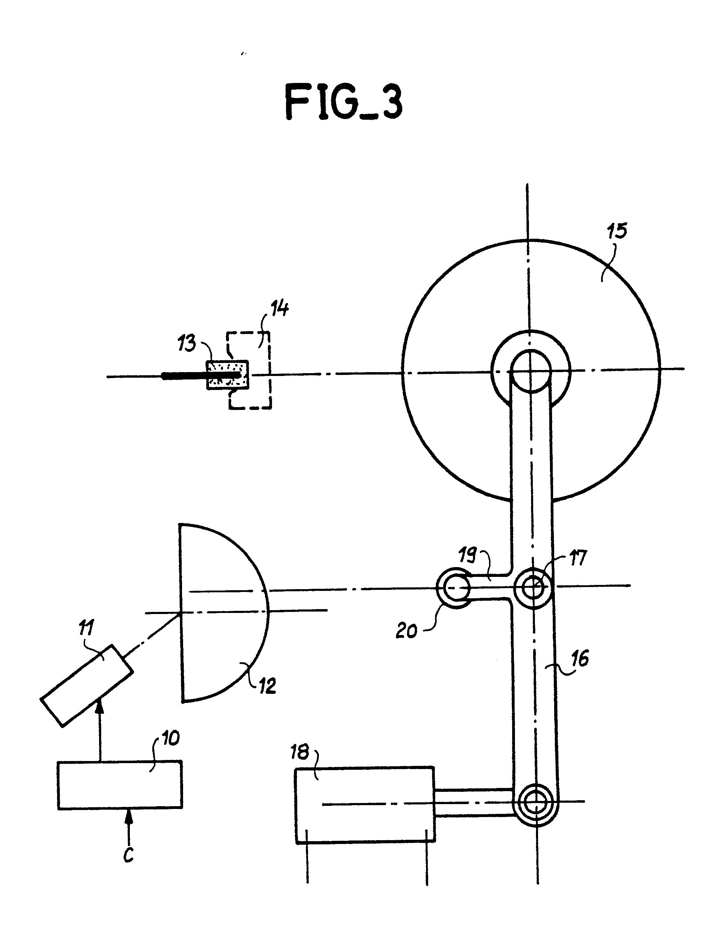

La figure 3 est un schéma explicatif d'une commande automatique possible pour l'ajustement de la capacité. La lecture capacitive (valeur mesurée représentée par la lettre C) est prise en compte par le microprocesseur 10 qui calcule le nombre d'impulsions à donner à un moteur pas à pas 11. Le moteur 11. après réception du signal envoyé par le microprocesseur, provoque le déplacement de la came 12 qui détermine la profondeur de l'entaille à effectuer. Durant l'étape de réalisation de l'entaille. l'élément capacitif 13 est bloqué contre une butée fixe 14 de manière à présenter sa face à entailler à la scie 15. Cette scie est par exemple constituée d'un disque de grand diamètre par rapport à la taille de l'élément capacitif pour que l'entaille se présente pratiquement sous la forme d'une rainure droite. La scie 15 est portée par un bras 16 mobile en rotation autour d'un axe d'articulation 17 situé à peu près à mi-longueur. Un vérin 18 actionne l'extrémité du bras 16 opposé à la scie pour amener celle-ci en position de travail. Le bras comporte également un doigt 19 supportant un galet 20. Lorsque le vérin 18 déplace la scie vers la pièce 13, la scie se met à entailler l'élément capacitif jusqu'à ce que le galet 20 soit arrêté par la came 12. Cette came aura avantageusement un développement en profilé d'Archimède. Les distances séparant la butée fixe 14 de la scie en position de repos, la came 12 du galet 20, la longueur du bras 16, la longueur et la position du doigt 19 seront calculées par des techniques connues de l'homme de l'art.

D'autres méthodes peuvent être appliquées pour réaliser l'entaille. Par exemple. l'entaille peut être effectuée pendant l'étape de mesure de l'élément capacitif et la came arrêterait de se mouvoir quand la valeur à ajuster serait atteinte.

Le procédé selon l'invention permet un ajustage très précis de la capacité suivant la forme de l'entaille que l'on gère. Il permet dajuster une pièce semi-finie capacitive du type à empilage ou à couches après les traitements thermique, électrique et de soudure. Il peut s'intégrer dans un complexe à grande cadence. Ce procédé n'apporte pas de modification sur le comportement électrique des éléments capacitifs puisqu'on peut utiliser le même outil de découpe et les mêmes paramètres que pour la coupe des condensateurs mères. Il devient possible, grâce au procédé de l'invention, de faire des condensateurs à tolérances serrées même si leurs dispersions est plus grande que la tolérance à réaliser.

Il entre dans le cadre de l'invention d'appliquer le procédé décrit au condensateur bobiné semi-fini en étudiant un profilé de came qui prenne en compte l'arrondi de la bobine et de l'entaille à effectuer ou par mesure de la capacité en même temps que l'outil enlève le volume actif en trop. Dans le cas où la découpe est effectuée pendant la mesure de la capacité, l'outil de découpe peut être en un matériau isolant.

## Revendications

1. Procédé permettant l'ajustement de la capacité d'un condensateur au cours de sa fabrication et par rapport à une capacité étalon, caractérisé en ce que le procédé comprend les étapes de:
- présentation de l'élément capacitif destiné à devenir le condensateur ajusté, cet élément ayant été conçu pour avoir une capacité légèrement supérieure à la capacité étalon,
- mesure de la capacité de cet élément capacitif,
- réalisation d'une entaille (6) dans le volume actif de l'élément capacitif, l'entaille correspondant à l'excès de capacité par rapport à la capacité étalon.

2. Procédé selon la revendication 1, caractérisé en ce qu'il est appliqué à l'ajustement de condensateurs du type à empilage ou en couches.

3. Procédé selon l'une des revendications 1 ou 2, caractérisé en ce que l'entaille (6) est constituée par une rainure droite.

4. Procédé selon l'une quelconque des revendications 1 à 3, caractérisé en ce que l'entaille ne mord pas dans les métallisations extérieures (2,3) de l'élément capacitif.

5. Procédé selon l'une quelconque des revendications précédentes, caractérisé en ce que la profondeur (I) de l'entaille est contrôlée par une came (12) dont le déplacement est fonction de l'écart existant entre la capacité mesurée et la capacité étalon.

6. Procédé selon la revendication 5, caractérisé en ce que la came (12) a un développement en profilé d'Archimède.

7. Procédé selon l'une des revendications 5 ou 6, caractérisé en ce que le déplacement de la came (12) est assuré par un moteur (11) commandé par un microprocesseur (10) en fonction de la valeur mesurée (C) de l'élément capacitif (13).

FIG_1

FIG_2

# FIG_3

# DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | GB-A- 849 510 (TELEPHONE MANUFACTURING CO. LTD) * Page 1, ligne 34 - page 2, ligne 40 * | 1,2,4 | H 01 G 4/34 H 01 G 13/00 |
| X | DE-B-1 028 692 (ROBERT BOSCH GmbH) * Colonne 1, ligne 45 - colonne 3, ligne 11; revendication 1; figure * | 1-3 | |
| X | US-A-3 456 170 (SPRAGUE ELECTRIC CO.) * Colonne 1, lignes 40-53; colonne 2, ligne 9 - colonne 3, ligne 2 * | 1-4 | |
| A | | 5 | |
| A | GB-A- 550 502 (W. DUBILIER CONDENSER CO.) * Revendication 1 * | 1 | |
| A | EP-A-0 144 857 (SIEMENS AG) * Page 10, ligne 10 - page 11, ligne 14; page 18, lignes 8-21 * | 1-3 | |
| P,X | EP-A-0 246 134 (COMPAGNIE EUROPEENNE DE COMPOSANTS ELECTRONIQUES LCC) * Page 4, ligne 21 - page 5, ligne 29; figure 2 * | 1-4 | DOMAINES TECHNIQUES RECHERCHES (Int. Cl.4) H 01 G |

Le présent rapport a été établi pour toutes les revendications

| Lieu de la recherche | Date d'achèvement de la recherche | Examinateur |
|---|---|---|
| LA HAYE | 28-03-1988 | SCHUERMANS N.F.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................................
& : membre de la même famille, document correspondant

EPO FORM 1503 03.82 (P0402)